# EUROPEAN PATENT APPLICATION

(11) **EP 4 756 519 A1**
(43) Date of publication of application: **10.06.2026**
(21) Application number: 24861952.0
(22) Date of filing: 03.09.2024
(51) Int. Cl.: G02F 1/133

(54) **STACKED ASSEMBLY, METHOD FOR PREPARING STACKED ASSEMBLY AND VEHICLE**

(30) Priority: 04.09.2023 CN 202311132683
(71) Applicant: Fuyao Glass Industry Group Co., Ltd., Fuqing, Fujian 350300 (CN)
(72) Inventor: YAN, Zheng, Fuqing, Fujian 350300 (CN); GUO, Yong, Fuqing, Fujian 350300 (CN)
(74) Representative: Zermani Biondi Orsi, Umberto
(86) International application number: PCT/CN2024/116509
(87) International publication number: WO 2025/051109

(57) **Abstract**

A stacked assembly (100), a method for preparing the stacked assembly (100), and a vehicle. The stacked assembly (100) comprises a first support layer (10) and a first conductive layer (20), wherein at least one blocking groove (21) is provided on the first conductive layer (20), and the at least one blocking groove (21) separates the first conductive layer (20) to form a plurality of conductive areas (20a) electrically isolated from each other; each conductive area (20a) comprises a power connection sub-area (22) and a functional sub-area (23) which are arranged adjacent to each other; and each blocking groove (21) comprises a first groove section (211), a transition groove section (212) and a second groove section (213), which are in communication with one another in sequence, wherein the first groove section (211) is arranged in an electrically isolated manner between the power connection sub-areas (22) of two adjacent conductive areas (20a) separated by the blocking groove (21), and the second groove section (213) is arranged in an electrically isolated manner between the functional sub-areas (23) of two adjacent conductive areas (20a) separated by the blocking groove (21).

## Description

### CROSS-REFERENCE TO RELATED APPLICATIONS

This application claims priority to Chinese patent application No. 202311132683.1, entitled "Laminated Assembly, Method for Fabricating Laminated Assembly and Vehicle", filed on September 4, 2023, the disclosure of which is incorporated herein by reference in its entirety.

### TECHNICAL FIELD

The present disclosure relates to the technical field of laminated assemblies, and in particular, to a laminated assembly, a method for fabricating the laminated assembly and a vehicle.

### BACKGROUND

Multi-functional glass is increasingly popular with users in the market, among which, glass with regional regulation function is more popular. With respect to the regional regulation function, it can be understood that the glass is divided into a plurality of light-transmitting regions, and each light-transmitting region can be individually controlled. For example, one light-transmitting region can be dark, and another light-transmitting region can be transparent, allowing different states to be displayed according to the requirements of the user.

In actual use, the glass with regional regulation function is prone to the phenomenon that when one light-transmitting region is electronically controlled, another light-transmitting region may also be controlled, thus affecting the user's operation experience.

### SUMMARY

Based on the above, it is necessary to provide a laminated assembly, a method for fabricating the laminated assembly and a vehicle, addressing the problem of electrical connection between mutually independent light-transmitting regions.

A first aspect of the present disclosure provides a laminated assembly including:
a first support layer; and
a first conductive layer disposed on the first support layer, where at least one isolation groove is formed on the first conductive layer, and the at least one isolation groove divides the first conductive layer into a plurality of conductive regions electrically isolated from each other;

Each conductive region includes a sub-power connection region and a sub-functional region arranged which are adjacent to each other; and each isolation groove includes a first groove section, a transition groove section and a second groove section which are in communication with each other in sequence;

The first groove section is electrically isolated between sub-power connection regions of two adjacent conductive regions separated by the isolation groove including said first groove section. The second groove section is electrically isolated between sub-functional regions of two adjacent conductive regions separated by the isolation groove including said second groove section.

A groove width of the transition groove section is greater than a groove width of the first groove section and a groove width of the second groove section.

A second aspect of the present disclosure further provides a method for fabricating a laminated assembly, including:
fabricating a first workpiece including a first conductive layer and a first support layer, the first conductive layer being disposed on the first support layer;
forming at least one first groove section extending through the first conductive layer, on the first workpiece; and
forming at least one transition groove section and at least one second groove section that extend through the first conductive layer, on the first workpiece, to obtain a second workpiece.

Each transition groove section is in communication with and located between, one corresponding first groove section and one corresponding second groove section. A groove width of the transition groove section is greater than a groove width of the first groove section and a groove width of the second groove section.

A third aspect of the present disclosure further provides a vehicle including a vehicle body and the above-described laminated assembly. The laminated assembly is mounted to the vehicle body.

In the above laminated assembly, method for fabricating the laminated assembly and vehicle, the first groove section of the isolation groove is used to electrically isolates the sub-power connection regions of two adjacent conductive regions, and the second groove section of the isolation groove is used to electrically isolates the sub-functional regions of two adjacent conductive regions. When the sub-power connection regions are energized, the current flowing into each sub-power connection region can flow to a corresponding sub-functional region. The user can control each sub-functional region by controlling the corresponding sub-power connection region to which such sub-functional region is electrically connected. Since there is a height difference between the first groove section and the second groove section, the transition groove section is arranged between the first groove section and the second groove section as a buffer, so that the groove width of the transition groove section is greater than the groove width of the first groove section and the groove width of the second groove section, which can be used to provide communication between the first groove section with the second groove section. As such, the electrical isolation capability of the isolation groove is be improved, and the split of the current when flowing through the transition groove section is reduced. In the split of the current, a part of the current flows to the sub-functional region of the first conductive region, and another part of the current flows to the sub-functional region of the second conductive region, so that there is a probability that the sub-functional region of the first conductive region and the sub-functional region of the second conductive region can be electrically controlled simultaneously by the sub-power connection region of the first conductive region.

The details of one or more embodiments of the present disclosure are set forth in the accompanying drawings and the description hereinafter. Other features, objects, and advantages of the present disclosure will become apparent from the specification, the accompanying drawings, and claims.

### BRIEF DESCRIPTION OF THE DRAWINGS

In order to better describe and illustrate the embodiments and/or examples of the present disclosure, reference may be made to one or more of the accompanying drawings. Additional details or examples used to describe the drawings should not be construed as limiting the scope of any of the disclosed application, the presently described embodiments and/or examples, and the best modes of the applications presently understood.
FIG. 1 is a sectional view of circumferential sides of a first conductive layer and a first support layer of a laminated assembly according to some embodiments of the present disclosure.
FIG. 2 is a top view of a first conductive layer of a laminated assembly according to some embodiments of the present disclosure.
FIG. 3 is a top view of a first conductive layer of a laminated assembly according to other embodiments of the present disclosure.
FIG. 4 is a top view of a first conductive layer of a laminated assembly according to still other embodiments of the present disclosure.
FIG. 5 is a partial enlarged view of portion A in FIG. 4.
FIG. 6 is a partial enlarged view of portion B in FIG. 4.
FIG. 7 is a sectional view of a laminated assembly according to some embodiments of the present disclosure.
FIG. 8 is a partial enlarged view of portion C in FIG. 7.
FIG. 9 is a top view of a laminated assembly according to some embodiments of the present disclosure.
FIG. 10 is a sectional view of a laminated assembly only including a first conductive layer and a first support layer according to some embodiments of the present disclosure.

### Illustration for Reference Numerals:

10, first support layer; 20, first conductive layer; 20a, conductive region; 21, isolation groove; 211, first groove section; 212, transition groove section; 213, second groove section; 22, sub-power connection region; 221, electrode pad; 23, sub-functional region; 24, first power-connecting pin; 30, electrode layer; 40, functional layer; 50, second conductive layer; 51, second power-connecting pin; 60, second support layer; 70, power-connecting member; 80, first transparent substrate; 90, second transparent substrate; 91, adhesive layer; a, first region; b, second region; c, third region; X, first direction; Y, second direction; and 100, laminated assembly.

### DETAILED DESCRIPTION

In order to facilitate the understanding of the present disclosure, a more comprehensive description of the present disclosure will be provided below with reference to the relevant drawings Preferred embodiments of the present disclosure are illustrated in the drawings. However, the present disclosure may be implemented in many different forms and is not limited to the embodiments described herein. It should be understood that, these embodiments are provided for the purpose of making the disclosure of the present disclosure more thorough and comprehensive.

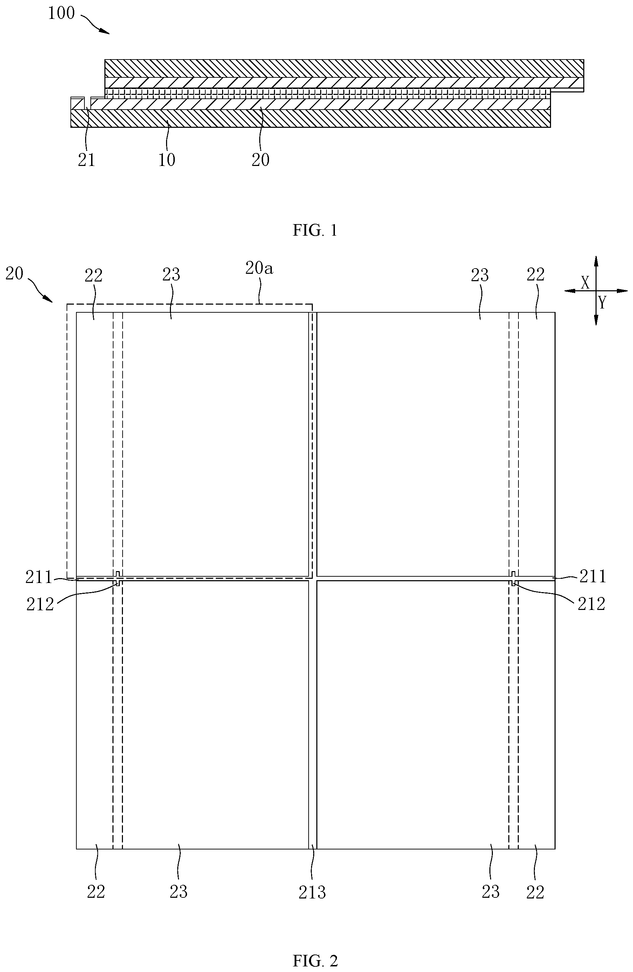

Referring to FIG. 1 and FIG. 2, some embodiments of the present disclosure provide a laminated assembly 100. The laminated assembly 100 includes a first support layer 10 and a first conductive layer 20. The first conductive layer 20 is disposed on the first support layer 10. At least one isolation groove 21 is formed on the first conductive layer 20, and the at least one isolation groove 21 divides the first conductive layer 20 into a plurality of conductive regions 20a electrically isolated from each other.

Each conductive region 20a includes a sub-power connection region 22 and a sub-functional region 23 arranged adjacent to each other. Each isolation groove 21 includes a first groove section 211, a transition groove section 212 and a second groove section 213 which are sequentially in communication with each other. The first groove section 211 is electrically isolated between the sub-power connection regions 22 of two adjacent conductive regions 20a which are separated by the isolation groove 21 including such first groove section 211. The second groove section 213 is electrically isolated between the sub-functional regions 23 of two adjacent conductive regions 20a which are separated by the isolation groove 21 including such second groove section 213. The transition groove section 212 is electrically isolated between two adjacent conductive regions 20a which is separated by the isolation groove 21 including such transition groove section 212. The groove width of the transition groove section 212 is greater than the groove width of the first groove section 211 and the groove width of the second groove section 213. The material used to form the first conductive layer 20 is not limited to a conductive material such as indium tin oxide (ITO). The sub-power connection region 22 is a region that can be connected to an external power supply. For example, the sub-power connection region 22 can be provided with an electrode pad. An end of a wire is electrically connected to the electrode pad of the sub-power connection region 22, and another end of the wire is electrically connected to an external power supply, so that an external current can be introduced into the sub-power connection region 22, and then flow to the sub-functional region 23 through the sub-power connection region 22.

The isolation groove 21 can divide the first conductive layer 20 into two, three, or more conductive regions 20a that are electrically isolated from each other. The specific quantity of the conductive regions 20a can be determined according to practical situations. The transition groove section 212 can be a protruding portion protruding out with respect to the first groove section 211 and the second groove section 213. The shape of an orthographic projection of the transition groove section 212 on the first support layer 10 can be, but is not limited to, a rectangle, a circle, or the like. When orthographically projected on the first support layer 10, the sub-functional regions 23 of the conductive regions 20a may have or may not behave equal projection areas. The sub-power connection regions 22 of all the conductive regions 20a can be collectively arranged at one part of the first conductive layer 20, or can be distributed over a plurality of parts of the first conductive layer 20.

For example, when the sub-power connection regions 22 of all the conductive regions 20a are distributed over the plurality of parts of the first conductive layer 20, as shown in FIG. 2, if the first conductive layer 20 is divided by two lines perpendicular to each other, the first conductive layer 20 can be divided into four conductive regions 22a arranged in a grid pattern (resembling the Chinese character " 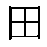 "). The sub-functional region 23 of each conductive region 20a is located in the middle region of the first conductive layer 20, and the sub-power connection region 22 of each conductive region 20a is located in the edge region of the first conductive layer 20. Two adjacent sub-power connection regions 22 are distributed in a second direction Y, and the remaining two adjacent sub-power connection regions 22 are also distributed in the second direction Y. In this case, all of the sub-power connection regions 22 can be roughly divided into two parts that are spaced apart in the first conductive layer 20 in a first direction X.

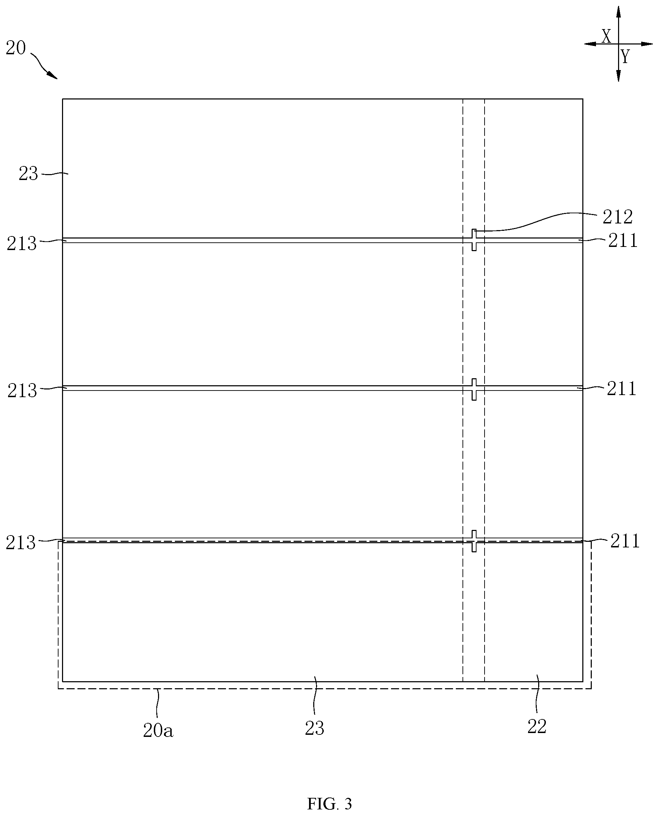

When the sub-power connection regions 22 of all the conductive regions 20a are collectively arranged at one part of the first conductive layer 20, the sub-power connection regions 22 of all the conductive regions 20a can be arranged side by side in the same direction, and the sub-functional regions 23 of all the conductive regions 20a can also be arranged side by side in the same direction. For example, in an example shown in FIG. 3, the sub-power connection regions 22 of all the conductive regions 20a are arranged side by side in the second direction Y, and the sub-functional regions 23 of all the conductive regions 20a are also arranged side by side in the second direction Y.

Hereinafter, the laminated assembly 100 will be described with reference to the embodiment in which the projection areas of the sub-functional regions 23 of the conductive regions 20a are equal.

As shown in FIG. 1, the first support layer 10 is covered with a first conductive layer 20 in a stacking direction of the laminated assembly 100. The first conductive layer 20 has an area equal to that of the first support layer 10. Referring to FIG. 3, the first conductive layer 20 can be divided into four conductive regions 20a, and two adjacent conductive regions 20a are separated by an isolation groove 21. The first groove section 211 of the isolation groove 21 is located between the sub-power connection regions 22 of two adjacent conductive regions 20a, and the second groove section 213 of the isolation groove 21 can be located between the sub-functional regions 23 of two adjacent conductive regions 20a.

When the sub-power connection regions 22 are electrified, since the first groove section 211 of the isolation groove 21 can electrically isolate the sub-power connection regions 22 of the two adjacent conductive regions 20a, and the second groove section 213 of the isolation groove 21 can electrically isolate the sub-functional regions 23 of the two adjacent conductive regions 20a, a current flowing into each sub-power connection region 22 can flow to a corresponding sub-functional region 23. The user can control each sub-functional region 23 by controlling the corresponding sub-power connection region 22 to which such sub-functional region 23 is electrically connected.

In the process that the current flows from the sub-power connection region 22 of the conductive region 20a to the sub-functional region 23, for example, a first conductive region and a second conductive region are arranged adjacent to each other, so when the current starts to flows in from the sub-power connection region 22 of the first conductive region, the shape of the flow path of the current is the same as the shape of the isolation groove 21 arranged between the first conductive region and the second conductive region. That is, the current can flow through the first groove section 211, the transition groove section 212, and the second groove section 213 sequentially.

Since there is a height difference between the first groove section 211 and the second groove section 213, the transition groove section 212 is arranged between the first groove section 211 and the second groove section 213 as a buffer, so that the groove width of the transition groove section 212 is greater than the groove width of the first groove section 211 and the groove width of the second groove section 213. As such, the electrical isolation capability of the isolation groove 21 can be improved, and the split of the current when flowing through the transition groove section 212 can be reduced. In the split of the current, a part of the current may flow to the sub-functional region 23 of the first conductive region, and another part of the current may flow to the sub-functional region 23 of the second conductive region, so that there is a probability that the sub-functional region 23 of the first conductive region and the sub-functional region 23 of the second conductive region can be electrically controlled simultaneously by the sub-power connection region 22 of the first conductive region. Further, the isolation groove 21 is divided into three groove sections, and different parts of two adjacent conductive regions 20a are electrically isolated by different groove sections of the isolation groove 21. According to the variation of different parts of the conductive regions 20a, the corresponding groove sections can be changed, so as to expand the applicability of the isolation groove 21 without compromising the electrical isolation function of the isolation groove 21.

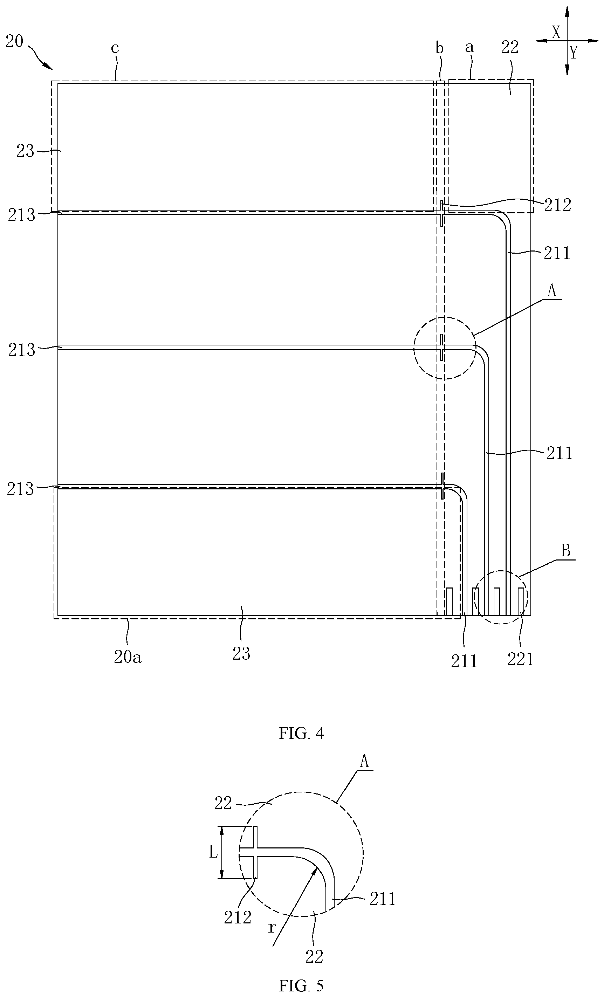

Referring to FIG. 4, in some embodiments, the sub-power connection region 22 and the sub-functional region 23 of each conductive region 20a are distributed in the first direction X. The sub-power connection regions 22 of two adjacent conductive regions 20a are arranged side by side in the second direction Y. The sub-functional regions 23 of two adjacent conductive regions 20a are arranged side by side in the second direction Y. The second direction Y intersects with the first direction X. For example, as shown in FIG. 4, the first conductive layer 20 is divided into four conductive regions 20a. All of the conductive regions 20a are sequentially distributed in the second direction Y. The sub-power connection regions 22 of all the conductive regions 20a are arranged side by side in the second direction Y. The sub-functional regions 23 of all the conductive regions 20a are also arranged side by side in the second direction Y. In other words, the sub-power connection regions 22 of all the conductive regions 20a are collectively arranged at one part of the first conductive layer 20.

By arranging the sub-power connection regions 22 of all the conductive regions 20a at one part of the first conductive layer 20, it is convenient to operate on the sub-power connection regions 22 of all the conductive regions 20a. For example, when arranging electrode pads sequentially on the sub-power connection regions 22 to electrically connect the external power supply, the processing difficulty of the sub-power connection regions 22 can be reduced. Specifically, in an embodiment, referring to FIG. 4, the first groove sections 211 in the sub-power connection regions 22 can extend in the second direction Y and be spaced apart in the first direction X. The second groove sections 213 in the sub-functional regions 23 can extend in the first direction X and be spaced apart in the second direction Y.

In the example shown in FIG. 4, the first conductive layer 20 is divided into four conductive regions 20a. All the conductive regions 20a are sequentially distributed in the second direction Y. The sub-functional regions 23 and the sub-power connection regions 22 of all the conductive regions 20a are also arranged side by side in the second direction Y, respectively. The sub-functional region 23 and the sub-power connection region 22 of each conductive layer are distributed in the first direction X. The second groove section 213 arranged between two adjacent sub-functional regions 23 extends in the first direction X. The first groove section 211 arranged between two adjacent sub-power connection regions 22 extends in the second direction Y. In this way, the start ends of all the first groove sections 211 are located on one side of the first conductive layer 20, and the start ends are arranged side by side with one of the sub-functional regions 23, which is disposed on the periphery of the first conductive layer 20, in the first direction X. The above start ends can be understood as current input ends of the first conductive layer 20. Therefore, the start end is usually provided with a component such as the electrode pad 221, capable of being electrically connected to the external power supply. Compared with arranging the start ends at other positions, by arranging the start ends at the above positions, the size of the required components such as the electrode pads 221 can be set as much small as possible, and the amount of routing wires for being connected to the start ends can be reduced.

Referring to FIG. 4 and FIG. 5, in some embodiments, a part of the first groove section 211 of each sub-power connection region 22 has an arc-shaped part which is located near the transition groove section 212, when orthographically projected on the first support layer 10. Compared with setting such part of the first groove section 211 near the transition groove section 212 as a right angle part, setting such part of the first groove section 211 as the arc-shaped part can reduce the probability of forming an explosion point at this part due to excessive energy concentration.

As shown in FIG. 5, specifically, in some embodiments, the outer radius of the arc-shaped part is denoted by r. The value range of r is represented as following: 1 mm ≤ r ≤ 10 mm, where the value of r can be 1 mm, 2 mm, 3 mm, 4 mm, 5 mm, 6 mm, 10 mm, etc. The specific value of r can be selected according to practical situations. When the value of r is 5 mm, the energy accumulated at the part of the first groove section 211 near the transition groove section 212 is appropriate, which can reduce the probability of forming the explosion point at this part due to excessive energy. More specifically, referring to FIG. 4 and FIG. 5, in some embodiments, the transition groove section 212 is located between the arc-shaped part of the first groove section 211 and the second groove section 213. The groove width of the transition groove section 212 is denoted by L. The value range of L is represented as following: 0.2 mm ≤ L ≤ 0.8 mm, where the value of L can be 0.2 mm, 0.5 mm, 0.7 mm, 0.8 mm, etc. The specific value of L can be selected according to practical situations. When the value of L is 0.5 mm, the transition groove section 212 achieves the best effect.

Referring to FIG. 4, in some embodiments, the groove width of the first groove section 211 is greater than the groove width of the second groove section 213. During practical use of the laminated assembly 100, the sub-functional region 23 where the second groove section 213 is located is actually located in a light-transmitting region of the whole laminated assembly 100. The light-transmitting region is a region through which the user can visually observe changes in the laminated assembly 100. The sub-power connection region 22 where the first groove section 211 is located is actually located in a wire routing region of the whole laminated assembly 100. The wire routing region is in a state of being blocked during use and cannot be seen by the user.

The groove width of the first groove section 211 of the isolation groove 21 is greater than the groove width of the second groove section 213 of the isolation groove 21. On the one hand, the groove width of the second groove section 213 can be reduced as much as possible without affecting the electrical isolation effect of the isolation groove 21, so as to reduce the distance between two adjacent sub-functional regions 23. During the use of the laminated assembly 100, the probability of cracks occurring between two adjacent sub-functional regions 23 can be reduced, so that the visual effect of the laminated assembly 100 during use can be beautified. On the other hand, since the voltage is lost during a current flowing from the sub-power connection region 22 to the sub-functional region 23, in order to enable a sufficient amount of current to flow to the sub-functional region 23, the groove width of the first groove section 211 is greater than the groove width of the second groove section 213 of the isolation groove 21, which can transmit as much current as possible, thereby controlling regions in the sub-functional region 23 that are located relatively far from the sub-power connection region 22. In view of the above, the above arrangement can reduce the probability of cracks occurring between two adjacent sub-functional regions 23 without affecting the electrical isolation effect of the isolation groove 21, so that the visual effect of the laminated assembly 100 during use can be beautified, thereby controlling the regions in the sub-functional region 23 located relatively far from the sub-power connection region 22.

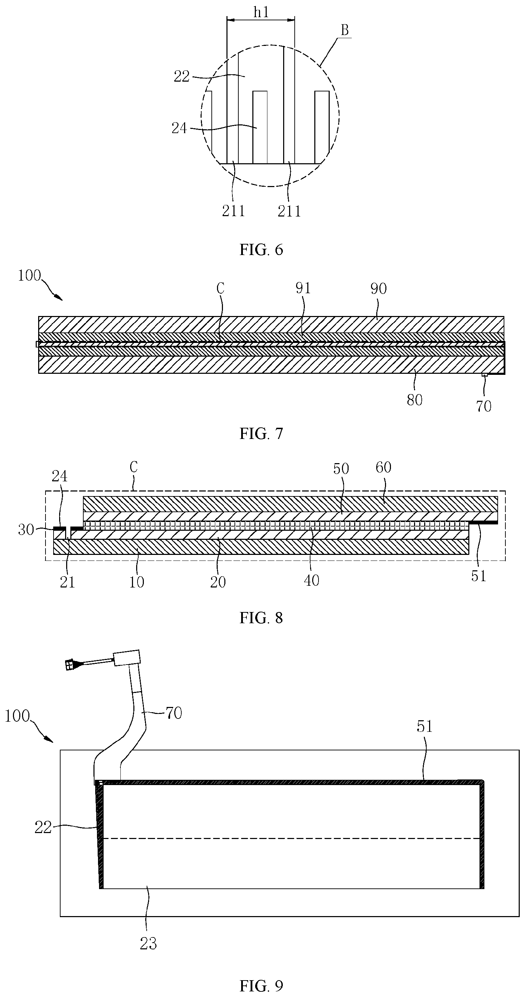

As shown in FIG. 6, in some embodiments, the distance between two adjacent first groove sections 211 is denoted by h1. The value range of h1 is represented as following: 2 mm ≤ h1 ≤10 mm, where the value of h1 can be 2 mm, 4 mm, 5 mm, 7 mm, 8 mm, 10 mm, etc. The specific value of h1 can be changed according to practical situations. When the value of h1 is 4mm, the width of the first groove section 211 can be reduced as much as possible without affecting the insulation function of the first groove section 211, so that the first groove section 211 is not visually conspicuous. Since the voltage drop of the sub-power connection region 22 located between two adjacent first groove sections 211 can be gradually increased as the distance between the two adjacent first groove sections 211 decreases, the distance between the two adjacent first groove sections 211 is controlled within a certain range, which can reduce the probability that the voltage drop is excessively high.

Referring to FIG. 4, FIG. 6 and FIG. 8, the laminated assembly 100 further includes an electrode layer 30. The electrode layer 30 is configured to be electrically connected to each sub-power connection region 22 and a power-connecting pin. When orthographically projected on the first support layer 10, the electrode layer 30 has a projection area that is less than the projection area of the first conductive layer 20. The electrode layer 30 can be made of materials such as silver paste that have both adhesive and conductive properties. In order to distinguish the power-connecting pin disposed on the electrode layer 30 from the power-connecting pin in other regions, the power-connecting pin disposed on the electrode layer 30 can be named as a first power-connecting pin 24.

For example, as shown in FIG. 8, the first power-connecting pin 24 can be a conductive copper sheet. The first power-connecting pin 24 can be adhered to each sub-power-connection region 22 by silver paste. Each first power-connecting pin 24 can also be electrically connected to a wire that is electrically connected to an external power supply, so that the laminated assembly 100 can be energized. In the process of applying the electrode layer 30, the projection area of the electrode layer 30 is configured to be less than the projection area of the first conductive layer 20. This configuration not only can reduce the probability of short circuit caused by the overflow of the electrode layer 30 to the first groove section 211, but also can simplify the manner of electrically connecting each sub-power connection region 22 to the external power supply.

Referring to FIG. 7, in some embodiments, the laminated assembly 100 further includes a functional layer 40 and a second conductive layer 50. The functional layer 40 is located at a side of the first conductive layer 20 facing away from the first support layer 10. The second conductive layer 50 is located at a side of the functional layer 40 facing away from the first conductive layer 20. A second support layer 60 is disposed at a side of the second conductive layer 50 facing away from the functional layer 40. The second conductive layer 50 includes a functional region and a power connection region. The functional region of the second conductive layer 50 corresponds to the light-transmitting region of the laminated assembly 100, and the power connection region of the second conductive layer 50 corresponds to the wire routing region of the laminated assembly 100. When orthographically projected on the second support layer 60, the functional region of the second conductive layer 50 can have a projection area that covers the projection area of all the sub-functional regions 23. The projection area of the power connection region of the second conductive layer 50 does not overlap with the projection area of the sub-power connection region 22 of the first conductive layer 20. The power connection region is electrically connected to a second power-connecting pin 51. The second power-connecting pin 51 and the first power-connecting pin 24 are different in electrical properties. The material used to form the functional layer 40 is not limited to one or a combination of two or more of polymer dispersed liquid crystal (PDLC), guest-host liquid crystal (GHLC), electrochromic (EC) device, suspended particle device (SPD), liquid crystal (LC), light-emitting diode (LED), thermal insulation film, color change film, light guide film, display film, and the like.

For example, in the example shown in FIG. 8, the first support layer 10, the first conductive layer 20, the functional layer 40, the second conductive layer 50, and the second support layer 60 are sequentially stacked in the stacking direction of the laminated assembly 100. When orthographically projected on the first support layer 10, the projection range of the functional region of the second conductive layer 50, the projection range of the light-transmitting region of the first conductive layer 20, and the projection range of all the sub-functional regions 23 of the first conductive layer 20 overlap with one another, and the projection range of the power connection region of the second conductive layer 50 does not overlap with the projection range of the sub-power connection region 22 of the first conductive layer 20.

In the stacking direction of the laminated assembly 100, an avoidance space is formed at a side of each sub-power connection region 22 of the first conductive layer 20 facing the functional layer 40. That is, the avoidance space is formed at a side of a part of the first conductive layer 20, where the first power-connecting pin 24 is disposed, facing the functional layer 40.

Similarly, an avoidance space is formed at a side of the power connection region of the second conductive layer 50 facing the functional layer 40. That is, the avoidance space is formed at a side of a part of the second conductive layer 50, where the second power-connecting pin 51 is disposed, facing the functional layer 40. Each avoidance space can respectively avoid a component electrically connected to the first power-connecting pin 24 or a component electrically connected to the second power-connecting pin 51.

When currents of different electrical properties are introduced into the first power-connecting pin 24 and the second power-connecting pin 51, the first conductive layer 20 and the second conductive layer 50 can generate an electric field, respectively. Under the action of the electric fields, the liquid crystals in the functional layer 40 can reorient, enabling the laminated assembly 100 to exhibit different visual effects, such as matte or transparent. Since each conductive region 20a of the first conductive layer 20 is electrically connected to a first power-connecting pin 24, the sub-functional region 23 can be controlled by the corresponding first power-connecting pin 24 electrically connected thereto. It can also be understood as that the light-transmitting region of the laminated assembly 100 is divided into multiple mutually independent sub-light-transmitting regions, and each sub-light-transmitting region can be independently controlled.

As shown in FIG. 9, in some embodiments, the laminated assembly 100 further includes a power-connecting member 70. An end of the power-connecting member 70 is electrically connected to the first power-connecting pin 24 and the second power-connecting pin 51, and another end of the power-connecting member 70 is electrically connected to the external power supply. The power-connecting member 70 can be understood as a plug that is plugged into the external power supply to be able to energize the entire laminated assembly 100. Referring to FIG. 7 and FIG. 8, in some embodiments, the laminated assembly 100 further includes a first transparent substrate 80 and a second transparent substrate 90. In the stacking direction of the laminated assembly 100, one of the first transparent substrate 80 and the second transparent substrate 90 covers the first support layer 10, and the other one of the first transparent substrate 80 and the second transparent substrate 90 covers the second support layer 60.

For example, as shown in FIG. 7 and FIG. 8, projected orthographically on the first transparent substrate 80, the projection range of the first transparent substrate 80 and the projection range of the second transparent substrate 90 can overlap with each other, and the projection range of the first support layer 10 and the like can fall within the projection range of the first transparent substrate 80. An adhesive layer 91 can be disposed between each transparent substrate and the support layer to adhere the transparent substrate and the support layer together, and to improve an adhesive effect between the transparent substrate and the support layer. It should be noted that the adhesive layer 91 can be made of adhesive materials such as polyvinyl butyral (PVB), PU and ethylene vinyl acetate (EVA), and both the first transparent substrate 80 and the second transparent substrate 90 can be ordinary glass.

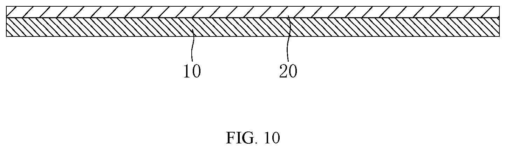

As shown in FIG. 10 and FIG. 4, some embodiments of the present disclosure provide a method for fabricating the laminated assembly 100. The fabrication method includes:
fabricating a first workpiece including a first conductive layer 20 and a first support layer 10, where the first conductive layer 20 is disposed on the first support layer 10;
forming at least one first groove section 211 extending through the first conductive layer 20 on the first workpiece; and
forming at least one transition groove section 212 and at least one second groove section 213 that extend through the first conductive layer 20 on the first workpiece to obtain a second workpiece.

Each transition groove is in communication with and located between one corresponding first groove section 211 and one corresponding second groove section 213 and the groove width of such transition groove section 212 is greater than the groove width of the corresponding one first groove section 211 and the corresponding one groove width of the second groove section 213.

In the actual fabricating process, the first support layer 10 may be provided first, and the first conductive layer 20 having the same area as the first support layer 10 can be applied on the surface of the first support layer 10, to obtain the first workpiece. Next, operations can be carried out on the first conductive layer 20. For example, by using etching, a groove extending through the first conductive layer 20 can be etched on the first conductive layer 20 along a preset route to form an isolation groove 21. The isolation groove 21 can include the first groove section 211, the transition groove section 212, and the second groove section 213 that are in communication with each other sequentially. During the etching process to form the transition groove section 212, the groove width of the transition groove section 212 is greater than the groove width of the first groove section 211 and the groove width of the second groove section 213. As such, the second workpiece is obtained. In this way, the first conductive layer 20 can be divided into several mutually independent portions by the isolation grooves 21. For example, when one groove is formed by etching, the first conductive layer 20 is divided into two portions. When two isolation grooves 21 are formed by etching, the first conductive layer 20 is divided into three portions, and so on. Each portion is divided into the sub-power connection region 22 and the sub-functional region 23. Two adjacent sub-power connection regions 22 are located on two sides of the first groove section 211, and two adjacent sub-functional regions 23 are located on two sides of the second groove section 213.

For example, referring to FIG. 2, after one isolation groove 21 is formed on the first conductive layer 20 by etching in the first direction X and another isolation groove 21 are formed on the first conductive layer 20 by etching in the second direction Y, the first conductive layer 20 can be divided into four conductive regions 20a arranged in a grid pattern (resembling the Chinese character " 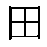 "). The sub-functional region 23 of each conductive region 20a is located in the middle region of the first conductive layer 20, and the sub-power connection region 22 of each conductive region 20a is located in the edge region of the first conductive layer 20. Two adjacent sub-power connection regions 22 are distributed in the first direction X, and the remaining two adjacent sub-power connection regions 22 are also distributed in the first direction X. In this way, the processing process of the first conductive layer 20 is simplified.

Referring to FIG. 4, in some embodiments, the method further includes, after disposing the first conductive layer 20 on the first support layer 10 to obtain the first workpiece:
forming an electrode layer 30 in a first region *a* of the first workpiece; and

The forming at least one first groove section 211 extending through the first conductive layer 20 on the first workpiece, which step including:
forming the at least one first groove section 211 extending through the first conductive layer 20 and the electrode layer 30 in the first region *a* of the first workpiece.

Before processing the first workpiece, the first workpiece can be divided into a first region *a* and a second region *b.* The first region *a* is a region in which operation such as wire routing can be performed in a subsequent process, and the second region b corresponds to the light-transmitting region of the laminated assembly 100, which is a visually variable region.

Before etching to form the first groove section 211, the electrode layer 30 can be formed on the surface of the entire first region *a*. The electrode layer 30 can be formed by, but not limited to, applying, printing, spraying, or the like. For example, the electrode layer 30 can be formed by applying silver paste on the surface of the first region *a*. Next, an entire relatively large electrode pad 221 can be disposed on the electrode layer 30, and then a groove (i.e., the first groove section 211) extending through the electrode pad 221, the electrode layer 30, and the first conductive layer 20 is etched on the surface of the silver paste. In this way, the electrode pad 221, the electrode layer 30, and the first region *a* of the first conductive layer 20 are each divided into several units, that are independent of each other and same in quantity.

In this way, an entire electrode pad 221 can be directly attached to the first region *a,* and when etching the first region *a,* the electrode pad 221, the electrode layer 30 and the first conductive layer 20 can be simultaneously etched, thereby simplifying the operation steps.

Specifically, in some embodiments, in the case where the first region *a* of the first workpiece is applied with the electrode layer 30, a carbon dioxide laser etching technique can be used to form at least one first groove section 211 extending through the first conductive layer 20 on the first workpiece. The electrode pad 221 has a certain hardness, and the energy of carbon dioxide laser etching is higher than that of ultraviolet laser etching. Therefore, the electrode pad 221 can be easily divided into several small electrode pads 221, and the difficulty of dividing the electrode pad 221 is reduced.

In other embodiments, the method further includes, after forming the at least one first groove section 211 extending through the first conductive layer 20 on the first workpiece: applying the electrode layer 30 on the first conductive layer 20 which is located in the first region *a* of the first workpiece and between adjacent first groove sections 211. After the groove (i.e., the first groove section 211) extending through the first conductive layer 20 is formed by etching in the first region *a* of the first workpiece, the unetched part of the first region *a* can be applied with silver paste or the like as the electrode layer 30. After the silver paste is applied, the operation such as attaching the electrode pad 221 or the like is performed. The area of the part of the first region *a* to be applied after etching in the first region *a* is less than the area of the initial first region *a,* and the parts to be coated can be separated from each other by the first groove sections 211, respectively, so that the it can reduce probability that the silver paste overflows to the first groove section 211, electrically connects two adjacent sub-power connection regions 22, and results in short circuit of the electrically connected regions.

In some embodiments, forming the at least one transition groove section 212 and the at least one second groove section 213 that extend through the first conductive layer 20 on the first workpiece to obtain the second workpiece includes: forming the at least one transition groove section 212 extending through the first conductive layer 20 in the second region b of the first workpiece, and forming the at least one second groove section 213 extending through the first conductive layer in a third region c of the first workpiece. The first region *a,* the second region b, and the third region c are connected in the first direction X. During operation on the first conductive layer 20, the first groove section 211 can be etched in the first region *a* firstly, and then, the transition groove section 212 can be etched in the second region b, and then the second groove section 213 can be etched in the third region c. Alternatively, the etching sequence of the regions can be changed.

For example, as shown in FIG. 4, when etching one single isolation groove 21, the second groove section 213 can be etched in the first direction X in the third region, and then the transition groove section 212 can be etched in the second region b to provide communication between the transition groove section 212 and the second groove section 213. Subsequently, the first groove section 211 can be etched in the first region *a* to provide communication between the first groove section 211 and the transition groove section 212, where the first groove section 211 can extend in the second direction Y. By analogy, the isolation grooves 21 are repeatedly etched until the corresponding number of conductive regions 20a are obtained, which simplifies the processing manner of each groove section. During forming the groove sections of the isolation groove 21, the steps of the processing process can be determined according to practical situations, and the specific processing steps of the isolation groove 21 can be mainly divided into two or three steps.

For example, when the processing process of the isolation groove 21 is divided into two steps, in the case where the first region *a* is applied with silver paste firstly and then etched, firstly, the second groove section 213 is etched in the third region and the transition groove section 212 is etched in the second region b, by using the ultraviolet laser etching technique, and then the first groove section 211 is etched in the first region *a* by using the carbon dioxide laser etching technique, so as to simultaneously extend through the silver paste layer, the electrode pad 221 attached to the silver paste layer, and the first region *a* of the first conductive layer 20.

In other embodiments, the first groove section 211 is etched in the first region *a* and the transition groove section 212 is etched in the second region b, by using the carbon dioxide laser etching technique, and then the second groove sections 213 are etched in the third region c sequentially by using the ultraviolet laser etching technique, so as to obtain the isolation groove 21.

When the processing process of the isolation groove 21 is divided into three steps, in the case where the first region *a* is etched first and then applied with silver paste, when etching one single isolation groove 21, the second groove section 213, the transition groove section 212, and the first groove section 211 can be sequentially etched in the third region c, the second region *b,* and the first region *a* by using the ultraviolet laser etching technique. That is, three discontinuous etching processes are performed in three regions. In this way, the first region *a* of the first conductive layer 20 is first etched into a plurality of independent small regions, and then operations like applying silver paste can be performed in each small region.

It should be noted that when etching to form the first groove section 211, the second groove section 213 and the transition groove section 212, three discontinuous etching processes can be performed. Alternatively, the transition groove section 212 can be etched using the same method as one of the first groove section 211 and the second groove section 213, to perform two discontinuous etching when etching to form the first groove section 211, the second groove section 213 and the transition groove section 212.

With this arrangement, it is possible to select, according to practical operational situations, appropriate process for processing the first conductive layer 20, thereby enriching the types of processes.

In some embodiments, the first workpiece is obtained. The first workpiece includes the first conductive layer 20 and the first support layer 10. The first conductive layer 20 is disposed on the first support layer 10, includes. The first workpiece includes a functional layer 40, a second conductive layer 50 and a second support layer 60. The functional layer 40 is disposed at a side of the first conductive layer 20 facing away from the first support layer 10, and the second conductive layer 50 and the second support layer 60 are sequentially stacked on a side of the functional layer 40 facing away from the first conductive layer 20. In other words, the first workpiece including a five-layer film structure including the first conductive layer 20, the first support layer 10, the functional layer 40, the second conductive layer 50 and the second support layer 60 etc. is first obtained, and then operations are performed on the first workpiece to form structures such as the first groove section 211.

In some embodiments, the method further includes, after forming the at least one transition groove section 212 and the at least one second groove section 213 that extend through the first conductive layer 20 on the first workpiece to obtain the second workpiece:
sequentially stacking the functional layer 40 and the second conductive layer 50 on the second workpiece in the stacking direction of the laminated assembly 100;
disposing the first support layer 10 at a side of the first conductive layer 20 facing away from the functional layer 40, and disposing the second support layer 60 at a side of the second conductive layer 50 facing away from the functional layer 40; and
disposing a first transparent substrate 80 at a side of the first support layer 10 facing away from the functional layer 40, and disposing a second transparent substrate 90 at a side of the second support layer 60 facing away from the functional layer 40.

For example, after obtaining the second workpiece, the functional layer 40 can be first disposed in the light-transmitting region of the second workpiece. After the functional layer 40 is disposed, the second conductive layer 50 can be disposed at the side of the functional layer 40 facing away from the second workpiece. When orthographically projected on the second workpiece, the projection range of the second conductive layer 50 completely covers the functional layer 40 and has a region that does not overlap with the second workpiece.

After the second conductive layer 50 is disposed, the first support layer 10 can be disposed at the side of the first conductive layer 20 facing away from the functional layer 40, and the second support layer 60 can be disposed at the side of the second conductive layer 50 facing away from the functional layer 40. When orthographically projected on the second workpiece, the projection range of the first support layer 10 overlaps with the projection range of the first conductive layer 20, and the projection range of the second support layer 60 overlaps with the projection range of the second conductive layer 50.

Next, the first transparent substrate 80 and the second transparent substrate 90 can be disposed. The first transparent substrate 80 is disposed at the side of the first support layer 10 facing away from the functional layer 40, and the second transparent substrate 90 is disposed at the side of the second support layer 60 facing away from the functional layer 40. When orthographically projected on the second workpiece, the projection range of the first transparent substrate 80 covers the first support layer 10 and the second support layer 60, and the projection range of the second transparent substrate overlap with the projection range of the first transparent substrate 80. In this way, the laminated assembly 100 can be obtained. The above fabrication method can improve the connection stability between the film layers on the basis of simplifying the fabrication process. It should be noted that the film layers can be connected together by adhesive bonding.

In addition, some embodiments of the present disclosure further provide a vehicle. The vehicle includes a vehicle body and the above-described laminated assembly 100. The laminated assembly 100 is mounted to the vehicle body. For the description of the laminated assembly 100, reference can be made to the above description, which will not be detailly described herein again. Since the vehicle includes the laminated assembly 100, the vehicle has the functions and beneficial effects of the laminated assembly 100 provided in the above embodiments, and details thereof are not repeatedly described here again.

The technical features of the embodiments above may be combined arbitrarily. To make the description concise, not all possible combinations of the technical features in the above embodiments are described. However, as long as there are no contradictions in the combinations of these technical features, all of the combinations should be considered to be within the scope of the specification.

The embodiments above only represent several implementation modes of the present disclosure, and the description thereof is relatively specific and detailed, but it should not be construed as limiting the scope of the patent application. It should be noted that for those skilled in the art, various modifications and improvements may be made without departing from the concept of the present disclosure, and all these modifications and improvements fall within the protection scope of the present disclosure. Therefore, the scope of protection of the patent application should be subject to the appended claims. The specification and drawings can be used to explain the content of the claims.

## Claims

1. A laminated assembly, comprising:
a first support layer; and
a first conductive layer disposed on the first support layer, wherein at least one isolation groove is formed on the first conductive layer, and the at least one isolation groove divides the first conductive layer into a plurality of conductive regions electrically isolated from each other;
wherein each conductive region comprises a sub-power connection region and a sub-functional region which are arranged adjacent to each other, and each isolation groove comprises a first groove section, a transition groove section and a second groove section which are in communication with each other in sequence;
the first groove section is electrically isolated between sub-power connection regions of two adjacent conductive regions separated by the isolation groove comprising said first groove section; and the second groove section is electrically isolated between sub-functional regions of two adjacent conductive regions separated by the isolation groove comprising said second groove section; and
a groove width of the transition groove section is greater than a groove width of the first groove section and a groove width of the second groove section.

2. The laminated assembly according to claim 1, wherein the sub-power connection region and the sub-functional region of each conductive region are distributed in a first direction, the sub-power connection regions of the two adjacent conductive regions are arranged side by side in a second direction, and the sub-functional regions of the two adjacent conductive regions are arranged side by side in the second direction; and
the second direction intersects with the first direction.

3. The laminated assembly according to claim 2, wherein first groove sections of sub-power connection regions extend in the second direction and are spaced apart in the first direction, and second groove sections of sub-functional regions extend in the first direction and are spaced apart in the second direction.

4. The laminated assembly according to claim 2, wherein the first groove section of each sub-power connection region has an arc-shaped part which is located close to the transition groove section, when orthographically projected on the first support layer.

5. The laminated assembly according to claim 4, wherein an outer radius of the arc-shaped part is denoted by r, wherein 1 mm ≤ r ≤ 10 mm.

6. The laminated assembly according to claim 4, wherein the transition groove section is located between the arc-shaped part of the first groove section and the second groove section, and the groove width of the transition groove section is denoted by L, wherein 0.2 mm ≤ L ≤ 0.8 mm.

7. The laminated assembly according to any one of claims 1 to 6, wherein the groove width of the first groove section is greater than the groove width of the second groove section.

8. The laminated assembly according to any one of claims 1 to 6, further comprising an electrode layer, wherein the electrode layer is configured to be electrically connected to each sub-power connection region and a power-connecting pin; and when orthographically projected on the first support layer, a projection area of the electrode layer is less than a projection area of the first conductive layer.

9. A method for fabricating a laminated assembly, comprising:
fabricating a first workpiece comprising a first conductive layer and a first support layer, the first conductive layer being disposed on the first support layer;
forming at least one first groove section extending through the first conductive layer, on the first workpiece; and
forming at least one transition groove section and at least one second groove section that extend through the first conductive layer, on the first workpiece, to obtain a second workpiece;
wherein each transition groove section is in communication with and located between, one corresponding first groove section and one corresponding second groove section; and a groove width of the transition groove section is greater than a groove width of the first groove section and a groove width of the second groove section.

10. The method according to claim 9, further comprising, after fabricating the first workpiece comprising the first conductive layer and the first support layer, and the first conductive layer being disposed on the first support layer:
forming an electrode layer in a first region of the first workpiece;
wherein the forming the at least one first groove section extending through the first conductive layer on the first workpiece comprises:
forming the at least one first groove section extending through the first conductive layer and the electrode layer in the first region of the first workpiece.

11. The method according to claim 9, further comprising, after forming the at least one first groove section extending through the first conductive layer on the first workpiece:
forming an electrode layer on the first conductive layer, which is located in the first region of the first workpiece and between adjacent first groove sections.

12. The method according to any one of claims 10 to 11, wherein the forming the at least one transition groove section and the at least one second groove section that extend through the first conductive layer on the first workpiece to obtain the second workpiece comprises:
forming the at least one transition groove section extending through the first conductive layer in a second region of the first workpiece, and forming the at least one second groove section extending through the first conductive layer in a third region of the first workpiece, wherein the first region, the second region and the third region are sequentially connected in a first direction.

13. The method according to claim 9, wherein the fabricating the first workpiece comprising the first conductive layer and the first support layer, and the first conductive layer being disposed on the first support layer, comprises:
the first workpiece comprises a functional layer, a second conductive layer and a second support layer, wherein the functional layer is disposed at a side of the first conductive layer facing away from the first support layer; and the second conductive layer and the second support layer are sequentially stacked on a side of the functional layer facing away from the first conductive layer.

14. The method according to claim 9, further comprising, after forming the at least one transition groove section and the at least one second groove section that extend through the first conductive layer, on the first workpiece to obtain the second workpiece:
sequentially stacking a functional layer and a second conductive layer on the second workpiece in a stacking direction of the laminated assembly;
disposing the first support layer at a side of the first conductive layer facing away from the functional layer, and disposing a second support layer at a side of the second conductive layer facing away from the functional layer; and
disposing a first transparent substrate at a side of the first support layer facing away from the functional layer, and disposing a second transparent substrate at a side of the second support layer facing away from the functional layer.

15. A vehicle comprising a vehicle body and the laminated assembly according to any one of claims 1 to 8, wherein the laminated assembly is mounted to the vehicle body.
